# EUROPEAN PATENT SPECIFICATION

(11) **EP 3 499 769 B1**
(45) Date of publication and mention of the grant of the patent: **19.04.2023**
(21) Application number: 17838825.2
(22) Date of filing: 11.08.2017
(51) Int. Cl.: H04L 1/18

(54) **METHOD AND DEVICE FOR TRANSMITTING AND RECEIVING HYBRID AUTOMATIC RETRANSMISSION REQUEST INFORMATION**
VERFAHREN UND VORRICHTUNG ZUM SENDEN UND EMPFANGEN VON INFORMATIONEN ÜBER HYBRIDE AUTOMATISCHE WIEDERHOLUNGSANFRAGEN
PROCÉDÉ ET DISPOSITIF POUR TRANSMETTRE ET RECEVOIR DES INFORMATIONS DE DEMANDE DE RETRANSMISSION AUTOMATIQUE HYBRIDE

(30) Priority: 12.08.2016 CN 201610668291
(43) Date of publication of application: 19.06.2019
(73) Proprietor: ZTE Corporation, Shenzhen, Guangdong 518057 (CN)
(72) Inventor: XIA, Shuqiang, Shenzhen Guangdong 518057 (CN); CHEN, Donglei, Shenzhen Guangdong 518057 (CN); HAN, Xianghui, Shenzhen Guangdong 518057 (CN); ZHANG, Wen, Shenzhen Guangdong 518057 (CN); SHI, Jing, Shenzhen Guangdong 518057 (CN); REN, Min, Shenzhen Guangdong 518057 (CN); ZHANG, Wenfeng, Shenzhen Guangdong 518057 (CN)
(74) Representative: Regimbeau
(86) International application number: PCT/CN2017/097212
(87) International publication number: WO 2018/028695

(56) References cited:
- CN-A- 103 650 619
- CN-A- 105 453 680
- CN-A- 106 301 702
- US-A1- 2014 211 767
- MEDIATEK INC: "PUCCH design in eLAA", 3GPP DRAFT; R1-162939 PUCCH IN ELAA_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080423, Retrieved from the Internet: URL:http://www.3gpp.org/ftp/tsg_ran/WG1_RL 1/TSGR1_84b/Docs/ [retrieved on 2016-04-02]
- SAMSUNG: "UCI Transmission on LAA SCell", 3GPP DRAFT; R1-164747 UCI PUSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096336, Retrieved from the Internet: URL:http://www.3gpp.org/ftp/tsg_ran/WG1_RL 1/TSGR1_85/Docs/ [retrieved on 2016-05-14]

## Description

### TECHNICAL FIELD

The present invention relates to communications and, in particular, to a method and device for transmitting and receiving hybrid automatic repeat request (HARQ) information.

### BACKGROUND

A hybrid automatic repeat request (HARQ) is a transmission mechanism for error control in a communication system. Specifically, after a sending end sends a data block, a receiving end receives and decodes the data packet, and determines whether the data packet is correctly decoded according to cyclic redundancy check (CRC) information. If the data block is correctly decoded, an acknowledgement (ACK) is fed back to the sending end. If the data packet is wrongly decoded, a negative acknowledgement (NACK) is fed back to the sending end, and the sending end retransmits the corresponding data block.

Long term evolution (LTE) and LTE-advanced (LTE-A) systems use hybrid ARQ (HARQ) in combination with forward error correction (FEC). Specifically, for frequency division duplexing (FDD), 8 stop-and-wait HARQ processes are used, and for time division duplexing (TDD), the number of processes is determined by an uplink-downlink ratio. Furthermore, in the HARQ protocol, the HARQ may be divided into synchronous HARQ and asynchronous HARQ according to the flexibility in the time domain. The HARQ may be divided into an adaptive HARQ and a non-adaptive HARQ according to the flexibility in the frequency domain.

In the existing LTE/LTE-A protocol, the asynchronous HARQ is used for downlink transmission and the synchronous HARQ is used for uplink transmission. For the FDD system, a physical downlink shared channel (PDSCH) received by a terminal in a subframe n will feeds back the ACK/NACK in a subframe n+4. If the NACK is fed back, retransmission will be implemented in any subsequent subframe, and usually in the fourth and subsequent subframe after the NACK is received. A physical uplink shared channel (PUSCH) received by a base station in the subframe n will feeds back the ACK/NACK in the subframe n+4. If the NACK is fed back, retransmission will be implemented in a subframe n+8. For the TDD system, a specific timing location and a retransmission location are determined according to the uplink-downlink ratio.

In the subsequent evolution of 3GPP, such as the 5th generation (5G) mobile communication system, ultra-low delay services such as industrial automation, remote control, smart grids and the like will be supported. In order to support the ultra-low delay services, one solution is to reduce the existing transmission time interval (TTI). For example, 14 orthogonal frequency division multiplexing (OFDM) symbols in the existing subframe are reduced to 1 to 7. Another solution is to reduce the processing delay of 1 ms or short TTI operation.

In order to reduce the processing delay, one solution is to implement fast feedback and reduce time from initial transmission to retransmission. However, in the existing protocol, retransmission delay is at least 8 ms. Furthermore, the HARQ analysis shows that the retransmission only exists in a case where the feedback is NACK. Therefore, it is necessary to further accelerate the fast retransmission of the NACK. However, in the existing protocol, since the timing of the ACK and the NACK is the same, faster feedback of the NACK than the ACK may not be implemented.

Existing methods of HARQ feedback are disclosed in MEDIATEK INC: "PUCCH design in eLAA",3GPP DRAFT; R1-162939 (2016-04-02) and SAMSUNG: "UCI Transmission on LAA SCell",3GPP DRAFT; R1-164747 (2016-05-14).

### SUMMARY

Embodiments of the present invention provide a method and device for transmitting and receiving hybrid automatic repeat request (HARQ) information to solve at least the problem in the existing art where a negative acknowledgement (NACK) cannot be fed back faster than an acknowledgement (ACK).

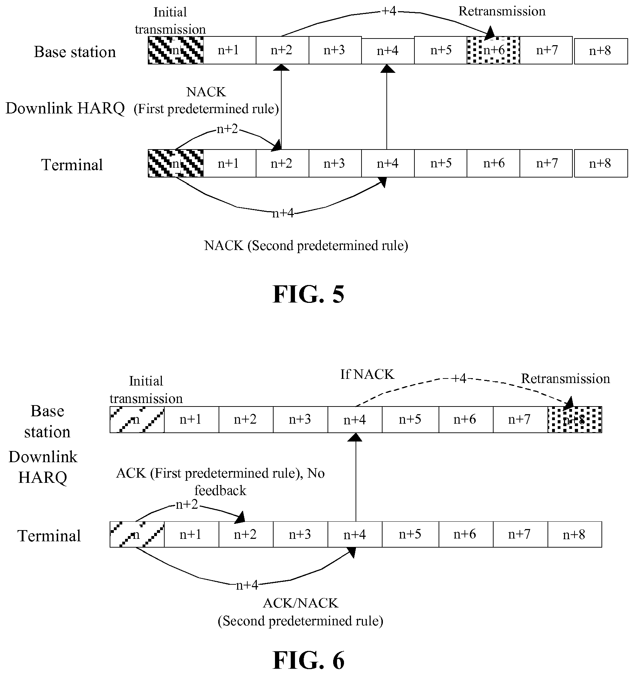

The invention is defined by the appended claims. The following embodiments of sending HARQ feedback in two time units n+k1 and n+k2 as depicted e.g. in fig. 5 are used to explain the claimed invention but do not form part of it. Other embodiments discussed below are not embodiments of the claimed invention.

Through the present invention, the feedback timing of HARQ is redefined. That is, the HARQ timing location is used as a timing transmission location of the HARQ. In such a way, the rapid feedback of the NACK may be implemented, and categorical timing of the ACK and the NACK may be implemented, thereby reducing the retransmission delay. Therefore, the problem in the existing art where the NACK cannot be fed back faster than the ACK may be solved.

### BRIEF DESCRIPTION OF DRAWINGS

The drawings described herein are used to provide a further understanding of the present invention, and form a part of the present application. The exemplary embodiments and descriptions thereof in the present invention are used to explain the present invention and do not limit the present invention in any improper way. In the drawings:
FIG. 1 is a flowchart of a method for transmitting HARQ information according to an embodiment of the present invention;
FIG. 2 is a block diagram of a device for transmitting HARQ information according to an embodiment of the present invention;
FIG. 3 is a flowchart of the method for receiving HARQ information according to the embodiment of the present invention;
FIG. 4 is a block diagram of a device for receiving HARQ information according to an embodiment of the present invention;
FIG. 5 is a schematic diagram illustrating a case where downlink HARQ is transmitted in two timing locations and NACKs are fed back in both two timing locations;
FIG. 6 is a schematic diagram illustrating a case where downlink HARQ is transmitted in two timing locations and the first location is quickly determined to be an ACK;
FIG. 7 is a schematic diagram illustrating a case where uplink HARQ is transmitted in two timing locations and NACKs are fed back in both two timing locations;
FIG. 8 is a schematic diagram illustrating a case where uplink HARQ is transmitted in two timing locations and NACKs are fed back in both two timing locations;
FIG. 9 is a schematic diagram illustrating a case where downlink HARQ is transmitted in two timing locations and the first location is quickly determined to be an NACK and the second location is determined to be an ACK;
FIG. 10 is a schematic diagram illustrating a case where uplink HARQ is transmitted in two timing locations and the first location is quickly determined to be an NACK and the second location is determined to be an ACK;
FIG. 11 is a schematic diagram illustrating a case where downlink HARQ is transmitted in two timing locations and the first location is quickly determined to be an ACK and the second location is determined to be an NACK;
FIG. 12 is a schematic diagram illustrating a case where downlink HARQ is transmitted in two timing locations and the first location is self-contained feedback;
FIG. 13 is a schematic diagram illustrating a case where uplink HARQ is transmitted in two timing locations and a transmission unit contains both uplink and downlink; and
FIG. 14 is a schematic diagram illustrating a case where downlink HARQ transmits feedback in one of two defined timing locations.

### DETAILED DESCRIPTION

The present invention will be described hereinafter in detail with reference to the drawings and in conjunction with the embodiments. It is to be noted that if not in collision, the embodiments and features therein in the present application may be combined with each other.

It is to be noted that the terms "first", "second" and the like in the description, claims and above drawings of the present invention are used to distinguish between similar objects and are not necessarily used to describe a particular order or sequence.

The scheme in embodiments of the present disclosure is applicable to a time division duplexing (TDD) system, a frequency division duplexing (FDD) system and a half-duplex system.

For ease of understanding of the present invention, the related technical terms involved in the embodiments of the present invention are described below.

N hybrid automatic repeat request (HARQ) timing locations refers to that transmitted data needs to transmit the HARQ in N transmission time unit locations to a data sender to request for retransmission of the data.

A transmission time unit is configured to a time unit for transmitting information and, in an LTE communication system, may include a subframe of 1 ms, a short transmission time interval (TTI) after the TTI is reduced, and a time unit for transmitting information in a subsequent evolved system (for example, a transmission symbol in the 5G communication system).

The length of the TTI of the first device may be different from the length of the TTI of the second device. For example, in an LTE system having a reduced TTI, the lengths of downlink TTI and uplink TTI may be different.

### Embodiment 1

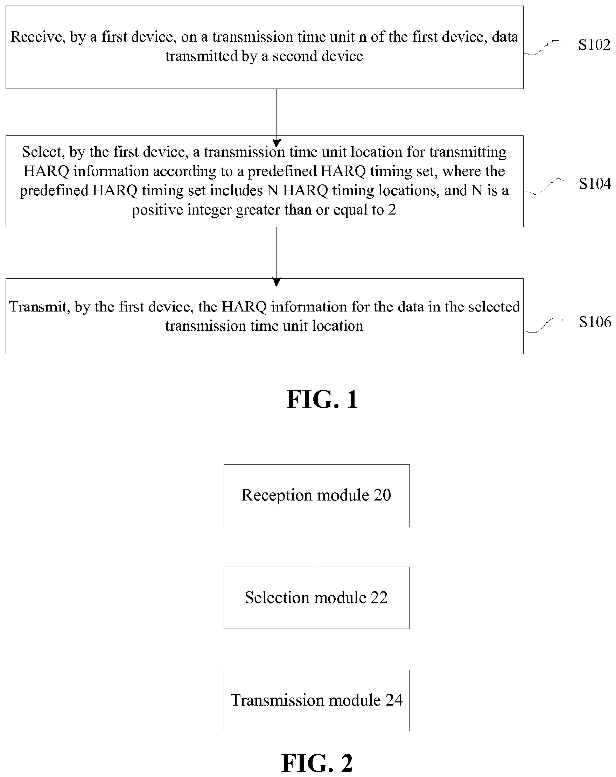

The embodiment of the present application provides a method for transmitting HARQ information. As shown in FIG. 1, the method includes steps describe below.

In step S102, a first device receives, on a transmission time unit n, data transmitted by a second device. Optionally, the transmission time unit is a time unit for transmitting information.

In step S104, the first device selects a transmission time unit location for transmitting HARQ information according to a predefined HARQ timing set. The predefined HARQ timing set includes N HARQ timing locations, and N is a positive integer greater than or equal to 2.

In step S106, the first device transmits the HARQ information for the data in the selected transmission time unit location.

Optionally, when N=2, the predefined HARQ timing set is {n+k1, n+k2}, where a transmission time unit corresponding to a first HARQ timing location is a transmission time unit n+k1, a transmission time unit corresponding to a second HARQ timing location is a transmission time unit n+k2, where k1 is an integer greater than or equal to 0, k2 is a positive integer, and k1 is less than k2.

Optionally, the first device transmits the HARQ information for the data on the transmission time unit n+k1 and/or the transmission time unit n+k2.

Optionally, when the data includes one data block, or when the data includes two or more data blocks and the first device uses data block binding feedback, the first device transmits 1-bit feedback for the data on the transmission time unit n+k1, and/or transmits 1-bit feedback for the data on the transmission time unit n+k2.

The data block binding feedback refers to that only when all data blocks of the data are received correctly, an acknowledgement (ACK) is fed back; otherwise, a negative acknowledgement (NACK) is fed back.

The data block is one or more transport blocks (TBs) or is one or more code block groups (CBGs).

Optionally, when the data includes two or more data blocks, the first device transmits P-bit feedback for the data on the transmission time unit n+k1, and/or transmits Q-bit feedback for the data on the transmission time unit n+k2, where P and Q are positive integers and less than or equal to the number of data blocks in the data.

Optionally, when the data received by the first device on the transmission time unit n is determined to be received correctly, no feedback is made on the transmission time unit n+k1 corresponding to the first HARQ timing location; otherwise, the NACK is fed back on the transmission time unit n+k1 corresponding to a first HARQ timing location.

Optionally, when the data received by the first device on the transmission time unit n is determined to be received correctly, the ACK is fed back on the transmission time unit n+k2 corresponding to the second HARQ timing location; otherwise, the NACK is fed back on the transmission time unit n+k2 corresponding to the second HARQ timing location; or when the data received by the first device on the transmission time unit n is determined to be received correctly, the ACK is fed back on the transmission time unit n+k2 corresponding to the second HARQ timing location; otherwise, no feedback is made on the transmission time unit n+k2 corresponding to the second HARQ timing location.

Optionally, when the data received by the first device on the transmission time unit n is determined to be received correctly, the ACK is fed back on the transmission time unit n+k1 corresponding to the first HARQ timing location; otherwise, no feedback is made on the transmission time unit n+k1 corresponding to the first HARQ timing location.

Optionally, when the data received by the first device on the transmission time unit n is determined to be received correctly, the ACK is fed back on the transmission time unit n+k2 corresponding to the second HARQ timing location; otherwise, the NACK is fed back on the transmission time unit n+k2 corresponding to the second HARQ timing location.

Optionally, when the data received by the first device on the transmission time unit n is determined to be received correctly, the ACK is fed back on the transmission time unit n+k1 corresponding to the first HARQ timing location; otherwise, the NACK is fed back on the transmission time unit n+k1 corresponding to the first HARQ timing location.

Optionally, when the data received by the first device on the transmission time unit n is determined to be received correctly, the ACK is fed back on the transmission time unit n+k2 corresponding to the second HARQ timing location; otherwise, no feedback is made on the transmission time unit n+k2 corresponding to the second HARQ timing location.

Optionally, when the data received by the first device on the transmission time unit n is determined to be received correctly, no feedback is made on the transmission time unit n+k2 corresponding to the second HARQ timing location; otherwise, the NACK is fed back on the transmission time unit n+k2 corresponding to the second HARQ timing location.

Optionally, the data received by the first device on the transmission time unit n is determined to be received correctly, no feedback is made on the transmission time unit n+k1 corresponding to the first HARQ timing location; otherwise, the NACK is fed back on the transmission time unit n+k1 corresponding to the first HARQ timing location. Furthermore, when the data received by the first device on the transmission time unit n is determined to be received correctly, the ACK is fed back on the transmission time unit n+k2 corresponding to the second HARQ timing location; otherwise, no feedback is made on the transmission time unit n+k2 corresponding to the second HARQ timing location.

Optionally, when the data received by the first device on the transmission time unit n is determined to be received correctly, the ACK is fed back on the transmission time unit n+k1 corresponding to the first HARQ timing location; otherwise, no feedback is made on the transmission time unit n+k1 corresponding to the first HARQ timing location. Furthermore, when the data received by the first device on the transmission time unit n is determined to be received correctly, the ACK is fed back on the transmission time unit n+k2 corresponding to the second HARQ timing location; otherwise, no feedback is made on the transmission time unit n+k2 corresponding to the second HARQ timing location.

Optionally, when the data received by the first device on the transmission time unit n is determined to be received correctly, the ACK is fed back on the transmission time unit n+k1 corresponding to the first HARQ timing location; otherwise, the NACK is fed back on the transmission time unit n+k1 corresponding to the first HARQ timing location. Furthermore, when the data received by the first device on the transmission time unit n is determined to be received correctly, the ACK is fed back on the transmission time unit n+k2 corresponding to the second HARQ timing location; otherwise, no feedback is made on the transmission time unit n+k2 corresponding to the second HARQ timing location.

Optionally, on the transmission time unit n+k1 corresponding to the first HARQ timing location, the first device feeds back the NACK for each data block received wrongly in the data received on the transmission time unit n, and makes no feedback for each data block received correctly.

Optionally, on the transmission time unit n+k2 corresponding to the second HARQ timing location, the first device feeds back the NACK for each data block received wrongly in the data received on the transmission time unit n, and feeds back the ACK for each data block received correctly. Alternatively, on the transmission time unit n, the first device feeds back the ACK for each data block received correctly, and makes no feedback for each data block received wrongly.

Optionally, on the transmission time unit n+k1 corresponding to the first HARQ timing location, the first device makes no feedback for each data block received wrongly in the data received on the transmission time unit n, and feeds back the ACK for each data block received correctly.

Optionally, on the transmission time unit n+k2 corresponding to the second HARQ timing location, the first device feeds back the NACK for each data block received wrongly in the data received on the transmission time unit n, and feeds back the ACK for each data block received correctly.

Optionally, on the transmission time unit n+k1 corresponding to the first HARQ timing location, the first device feeds back the NACK for each data block received wrongly in the data received on the transmission time unit n, and feeds back the ACK for each data block received correctly.

Optionally, on the transmission time unit n+k2 corresponding to the second HARQ timing location, the first device feeds back the NACK for each data block received wrongly in the data received on the transmission time unit n, and makes no feedback for each data block received correctly.

Optionally, on the transmission time unit n+k2 corresponding to the second HARQ timing location, the first device makes no feedback for each data block received wrongly in the data received on the transmission time unit n, and feeds back the ACK for each data block received correctly.

Optionally, on the transmission time unit n+k1 corresponding to the first HARQ timing location, the first device feeds back the NACK for each data block received wrongly in the data received on the transmission time unit n, and makes no feedback for each data block received correctly. Furthermore, on the transmission time unit n+k2 corresponding to the second HARQ timing location, the first device makes no feedback for each data block received wrongly in the data received on the transmission time unit n, and feeds back the ACK for each data block received correctly.

Optionally, on the transmission time unit n+k1 corresponding to the first HARQ timing location, the first device feeds back the ACK for each data block received wrongly in the data received on the transmission time unit n, and feeds back the ACK for each data block received correctly. Furthermore, on the transmission time unit n+k2 corresponding to the second HARQ timing location, the first device makes no feedback for each data block received wrongly in the data received on the transmission time unit n, and feeds back the ACK for each data block received correctly.

Optionally, on the transmission time unit n+k1 corresponding to the first HARQ timing location, the first device feeds back the NACK for each data block received wrongly in the data received on the transmission time unit n, and feeds back the ACK for each data block received correctly. Furthermore, on the transmission time unit n+k2 corresponding to the second HARQ timing location, the first device feeds back the NACK for each data block received wrongly in the data received on the transmission time unit n, and feeds back the ACK for each data block received correctly.

Optionally, when the data received on the transmission time unit n has a data block received wrongly, the first device feeds back the NACK on the transmission time unit n+k1 corresponding to the first HARQ timing location; otherwise, the first device makes no feedback on the transmission time unit n+k1 corresponding to the first HARQ timing location.

Optionally, on the transmission time unit n+k2 corresponding to the second HARQ timing location, the first device feeds back the NACK for each data block received wrongly in the data received on the transmission time unit n, and feeds back the ACK for each data block received correctly. Alternatively, on the transmission time unit n, the first device feeds back the ACK for each data block received correctly, and makes no feedback for each data block received wrongly.

Optionally, when all data blocks in the data received on the transmission time unit n are received correctly, the first device feeds back the ACK on the transmission time unit n+k1 corresponding to the first HARQ timing location; otherwise, the first device makes no feedback on the transmission time unit n+k1 corresponding to the first HARQ timing location.

Optionally, on the transmission time unit n+k2 corresponding to the second HARQ timing location, the first device feeds back the NACK for each data block received wrongly in the data received on the transmission time unit n, and feeds back the ACK for each data block received correctly.

Optionally, when the data received on the transmission time unit n has a data block received wrongly, the first device makes no feedback on the transmission time unit n+k1 corresponding to the first HARQ timing location; and when all data blocks in the data received on the transmission time unit n are received correctly, the first device feeds back the ACK on the transmission time unit n+k1 corresponding to the first HARQ timing location.

Optionally, on the transmission time unit n+k2 corresponding to the second HARQ timing location, the first device feeds back the NACK for each data block received wrongly in the data received on the transmission time unit n, and makes no feedback for each data block received correctly.

Optionally, on the transmission time unit n+k2 corresponding to the second HARQ timing location, the first device makes no feedback for each data block received wrongly in the data received on the transmission time unit n, and feeds back the ACK for each data block received correctly.

Optionally, when the data received on the transmission time unit n has a data block received wrongly, the first device feeds back the NACK on the transmission time unit n+k1 corresponding to the first HARQ timing location; otherwise, the first device makes no feedback on the transmission time unit n+k1 corresponding to the first HARQ timing location. Furthermore, on the transmission time unit n+k2 corresponding to the second HARQ timing location, the first device makes no feedback for each data block received wrongly in the data received on the transmission time unit n, and feeds back the ACK for each data block received correctly.

Optionally, all data blocks in the data received on the transmission time unit n are received correctly, the first device feeds back the NACK on the transmission time unit n+k1 corresponding to the first HARQ timing location; otherwise, the first device makes no feedback on the transmission time unit n+k1 corresponding to the first HARQ timing location. Furthermore, on the transmission time unit n+k2 corresponding to the second HARQ timing location, the first device makes no feedback for each data block received wrongly in the data received on the transmission time unit n, and feeds back the ACK for each data block received correctly.

Optionally, when the data received on the transmission time unit n has a data block received wrongly, the first device feeds back the NACK on the transmission time unit n+k1 corresponding to the first HARQ timing location; and when all data blocks in the data received on the transmission time unit n are received correctly, the first device feeds back the ACK on the transmission time unit n+k1 corresponding to the first HARQ timing location. Furthermore, when the data received on the transmission time unit n has a data block received wrongly, the first device feeds back the NACK on the transmission time unit n+k2 corresponding to the second HARQ timing location; and when all data blocks in the data received on the transmission time unit n are received correctly, the first device feeds back the ACK on the transmission time unit n+k2 corresponding to the second HARQ timing location.

Optionally, the first device selects one of the two timing locations to transmit the HARQ.

Optionally, the predefined set is configured through higher layer signaling.

Optionally, a transmission mode used for feedback on the transmission time unit n+k1 corresponding to the first HARQ timing location is different from a transmission mode used for feedback on the transmission time unit n+k2 corresponding to the second HARQ timing location.

Furthermore, the transmission mode refers to different formats of uplink physical control channel.

Optionally, the method further includes: when the second device receives the NACK fed back by the first device for the data on the transmission time unit n+k1, transmitting corresponding retransmission data on the transmission time unit n+k1+m1; or when the second device receives the NACK fed back by the first device for the data on the transmission time unit n+k1, and when the second device receives the ACK fed back by the first device for the data on the transmission time unit n+k2, not transmitting the corresponding retransmission data on the transmission time unit n+k1+m1, where m1 is an integer greater than or equal to 0.

Optionally, the method further includes: when the second device receives the NACK fed back by the first device for the data on the transmission time unit n+k2, transmitting the corresponding retransmission data on the transmission time unit n+k1+m2; or when either the ACK or the NACK is received on the transmission time unit n+k2, not transmitting the corresponding retransmission data on the transmission time unit n+k1+m2, where m2 is an integer greater than or equal to 0.

Optionally, the retransmission data may be the same as the initial transmission data, or may be a different redundancy version of the initial transmission data.

Optionally, determination on the received data is obtained on the transmission time unit n+k1 corresponding to the first HARQ timing location is performed according to a first predetermined rule; and determination on the received data is obtained on the transmission time unit n+k2 corresponding to the second HARQ timing location is performed according to a second predetermined rule.

Specifically, the first predetermined rule may include, but is not limited to:
obtaining a quantized channel quality value according to a channel state at the transmission time unit n, and comparing the quantized channel quality value with a predefined channel quality threshold;
obtaining the quantized channel quality value according to a channel state on the transmission time unit and one or more moments before the transmission time unit n, and comparing the quantized channel quality value with the predefined channel quality threshold; or
demodulating and decoding part of the data received at the time of the transmission time unit n.

The quantized channel quality value may include, but is not limited to, an SNR level, receive signal power, noise power, or interference signal power.

Specifically, the second predetermined rule includes, but is not limited to, demodulating and decoding the data received at the time of the transmission time unit n, and determining whether the data is received correctly according to CRC or other check criteria.

From the description of the embodiment described above, it will be apparent to those skilled in the art that the methods in the embodiment described above may be implemented by software plus a necessary general-purpose hardware platform, or may of course be implemented by hardware. However, in many cases, the former is a preferred implementation mode. Based on this understanding, the solution provided by the present invention substantially, or the part contributing to the existing art, may be embodied in the form of a software product. The computer software product is stored in a storage medium (such as an ROM/RAM, a magnetic disk or an optical disk) and includes several instructions for enabling a terminal device (which may be a mobile phone, a computer, a server, a network device, or the like) to execute the method according to each embodiment of the present invention.

### Embodiment 2

The embodiment of the present application further provides a device for transmitting HARQ information. The device is used for implementing the above-mentioned embodiments and preferred embodiments. What has been described will not be repeated. As used below, the term "module" may be software, hardware or a combination thereof capable of implementing predetermined functions. The device in the embodiment described below is preferably implemented by software, but implementation by hardware or by a combination of software and hardware is also possible and conceived.

FIG. 2 is a block diagram of a device for transmitting HARQ information according to an embodiment of the present invention. As shown in FIG. 2, the device includes: a reception module 20, a selection module 22 and a transmission module 24.

The reception module 20 is configured to receive, on a transmission time unit n, data transmitted by a second device, where the transmission time unit is a time unit for transmitting information.

The selection module 22 is connected to the reception module 20 and is configured to select a transmission time unit location for transmitting HARQ information from a predefined HARQ timing set, where the predefined HARQ timing set includes N HARQ timing locations, and N is a positive integer greater than or equal to 2.

The transmission module 24 is connected to the selection module 22 and is configured to transmit the HARQ information for the data in the selected transmission time unit location.

It should be noted that for optional implementation modes in the embodiment, reference may be made to the related description in the embodiment 1, and thus no further details are provided herein.

It is to be noted that the various modules described above may be implemented by software or hardware. Implementation by hardware may, but may not necessarily, be performed in the following manner: the various modules described above are located in a same processor, or the various modules described above are located in their respective processors in any combination form.

### Embodiment 3

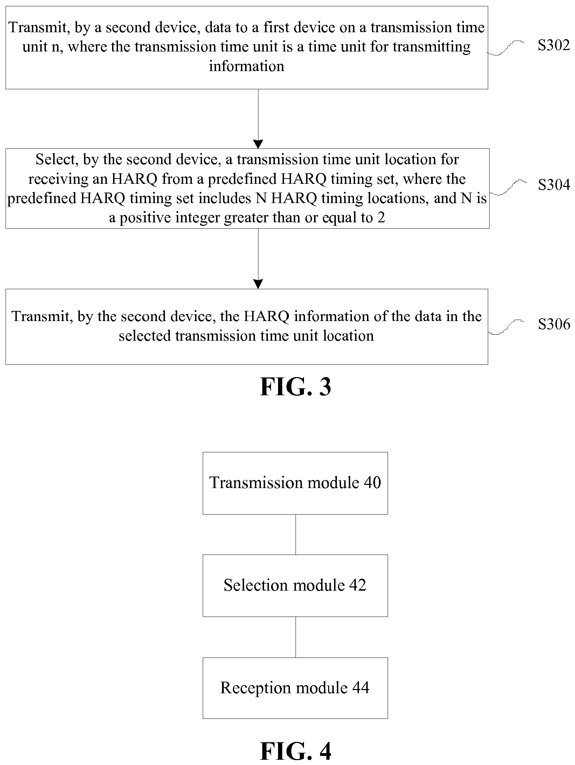

The embodiment of the present application provides a method for receiving HARQ information. As shown in FIG. 3, the method includes steps described below.

In step S302, a second device transmits data to a first device on a transmission time unit n, where the transmission time unit is a time unit for transmitting information.

In step S304, the second device selects a transmission time unit location for receiving an HARQ from a predefined HARQ timing set. The predefined HARQ timing set includes N HARQ timing locations, and N is a positive integer greater than or equal to 2.

In step S306, the second device transmits the HARQ information of the data in the selected transmission time unit location.

It should be noted that for optional implementation modes in the embodiment, reference may be made to the related description in the embodiment 1, and thus no further details are provided herein

### Embodiment 4

The embodiment of the present application provides a device for receiving HARQ information. As shown in FIG. 4, the device includes a transmission module 40, a selection module 42 and a reception module 44.

The transmission module 40 is configured to transmit data to a first device on a transmission time unit n, where the transmission time unit is a time unit for transmitting information.

The selection module 42 is configured to select a transmission time unit location for receiving an HARQ from a predefined HARQ timing set. The predefined HARQ timing set includes N HARQ timing locations, and N is a positive integer greater than or equal to 2.

The reception module 44 is configured to receive the HARQ information of the data in the selected transmission time unit location.

It should be noted that for optional implementation modes in the embodiment, reference may be made to the related description in the embodiment 1, and thus no further details are provided herein.

It is to be noted that the various modules described above may be implemented by software or hardware. Implementation by hardware may, but not necessarily, be performed in the following manner: the various modules described above are located in a same processor, or the various modules described above are located in their respective processors in any combination form.

To better understand the embodiments described above, the present application will be further described below in conjunction with embodiments 5 to 13.

### Embodiment 5

FIG. 5 is a schematic diagram illustrating a case where downlink HARQ is transmitted in two timing locations and NACKs are fed back in both two timing locations. In FIG. 5, a base station transmits initial transmission data on the transmission time unit n. A terminal receives the data on a corresponding transmission time unit and determines the received data according to different rules. For example, in order to implement the quick determination in the first timing location, the terminal obtains a quantized channel quality value according to a channel state on the transmission time unit n and compares with a predefined channel quality threshold. Furthermore, the channel quality threshold may be obtained according to simulation statistics, so that a greater probability of error appears when the channel quality value is less than the threshold, such as 90% BLER. In FIG. 5, results obtained by the terminal from the quick determination and the determination on actual demodulated data are NACKs. The terminal feeds back the NACK respectively on the transmission time unit n+2 and the transmission time unit n+4. Correspondingly, after receiving the NACK feedback on the transmission time unit n+2, the base station schedules retransmission on the transmission time unit n+6, and the base station does not trigger the retransmission after receiving the NACK feedback on the transmission time unit n+4. Correspondingly, k1=2, k2=4 and m1=4. Through the embodiment, the retransmission can be sped up when the data is wrongly received, thereby reducing the delay. The embodiment is also applicable to the uplink HARQ timing.

### Embodiment 6

FIG. 6 is a schematic diagram illustrating a case where downlink HARQ is transmitted in two timing locations and the first location is quickly determined to be an ACK. In FIG. 6, the base station transmits initial transmission data on the transmission time unit n. The terminal receives the data on corresponding transmission time unit and determines the received data according to different rules. For example, in order to implement the quick determination in the first timing location, the terminal obtains the quantized channel quality value jointly according to the channel state on the transmission time unit n and the channel state at the last moment prior to the transmission time unit n, and compares with the predefined channel quality threshold. In FIG. 6, a result obtained by the terminal from the quick determination is ACK, and the terminal makes no feedback on the transmission time unit n+2. A feedback result obtained from determination on decoded data is transmitted on the transmission time unit n+4. If the data is determined to be received correctly, the ACK is fed back; and if the data is determined to be received wrongly, the NACK is fed back. If the NACK is fed back, the base station schedules the retransmission on the transmission time unit n+8 after receiving the NACK. If the ACK is fed back, the base station does not trigger the retransmission after receiving the ACK. Correspondingly, k2=4, and m2=4. Through the method in the embodiment, when the ACK is determined in the first timing location and no feedback is made, feedback resources may be saved and the feedback operation in the second timing location is not be affected. The embodiment is also applicable to the uplink HARQ timing.

### Embodiment 7

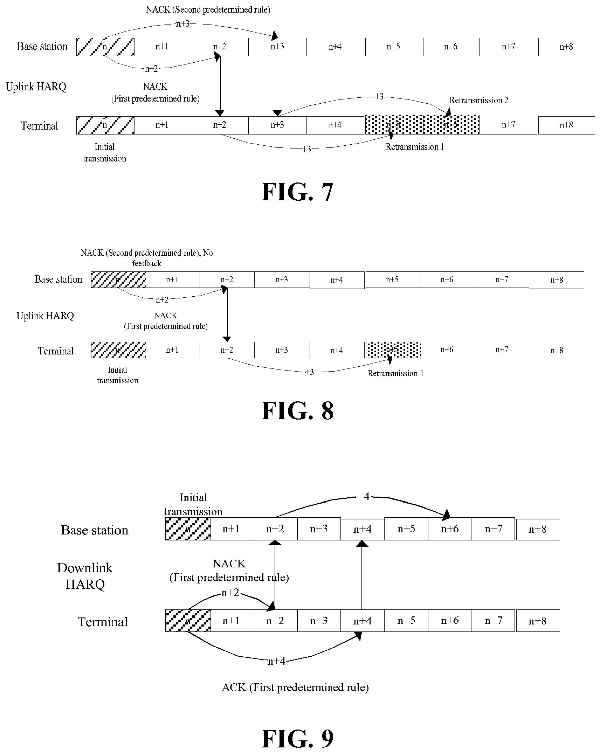

FIG. 7 is a schematic diagram illustrating a case where uplink HARQ is transmitted in two timing locations and NACKs are fed back in both two timing locations. In FIG. 7, the terminal transmits initial transmission data on the transmission time unit n. The base station receives the data on a corresponding transmission time unit and determines the received data according to different rules. For example, in order to implement the quick determination in the first timing location (i.e., the HARQ timing location), the base station decodes only part of data and determines the data according to the initial decoding result. In FIG. 7, results obtained by the terminal from the quick determination and the determination on actual demodulated data are NACKs. The base station feeds back the NACK respectively on the transmission time unit n+2 and on the transmission time unit n+3. Correspondingly, after receiving the NACK feedback on the transmission time unit n+2, the terminal schedules the retransmission on the transmission time unit n+5. After receiving the NACK feedback on the transmission time unit n+3, the terminal schedules the retransmission on the transmission time unit n+6. Correspondingly, k1=2, k2=3, m1=3 and m2=3. Through the method in the embodiment, multiple times of retransmission may be triggered consecutively, and transmission reliability may be increased and no more delay is introduced in a poor channel state. The embodiment is also applicable to the downlink HARQ timing.

### Embodiment 8

FIG. 8 is a schematic diagram illustrating a case where uplink HARQ is transmitted in two timing locations and NACKs are fed back in both two timing locations. The base station receives the data on a corresponding transmission time unit and determines the received data according to different rules. In FIG. 8, determination results obtained by the base station from the quick determination and the determination on actual demodulated data are NACKs. The base station feeds back the NACK only in the first timing location (i.e., the transmission time unit n+2). Correspondingly, after receiving the NACK feedback on the transmission time unit n+2, the terminal schedules the retransmission on the transmission time unit n+5. The base station makes no feedback in the second timing location n+k2. Correspondingly, k1=2, and m1=3. In such a way, the retransmission delay may be reduced and overhead of feedback resources may be decreased in a poor channel state.

Furthermore, if the result obtained by the base station from the quick determination is ACK, the base station makes no feedback on the transmission time unit n+k1. Preferably, the base station performs the determination on the transmission time unit n+k2 according to the actual demodulated data. If the data is received correctly, the ACK is fed back; and if the data is received wrongly, the NACK is fed back. Correspondingly, the base station makes no related processing at the time of the transmission time unit n+1, but determines whether to retransmit the data according to feedback on the transmission time unit n+2.

The embodiment is also applicable to the downlink HARQ timing.

### Embodiment 9

FIG. 9 is a schematic diagram illustrating a case where downlink HARQ is transmitted in two timing locations and the first location is quickly determined to be an NACK and the second location is determined to be an ACK. In FIG. 9, the base station transmits initial transmission data on the transmission time unit n. The initial transmission data includes two data blocks. The terminal receives the data on a corresponding transmission time unit and determines the received data according to different predefined rules. In FIG. 9, the terminal determines that one data block is received wrongly according to the quick determination and determines that both data blocks are received correctly according to the determination on actual demodulated data. Correspondingly, the terminal performs binding feedback on the transmission time unit n+2 and on the transmission time unit n+4. That is, a 1-bit NACK is fed back on the transmission time unit n+2, and a 1-bit ACK is fed back on the transmission time unit n+4. When receiving the NACK feedback on the transmission time unit n+2, the base station will prepare the transmission of the retransmission data. However, when receiving the ACK feedback at the transmission time unit n+4, the base station cancels the transmission of the retransmission data. That is, the base station does not transmit the retransmission data at the transmission time unit n+6. Through the method in the embodiment, when the described situation appears, retransmission due to mistaken determination in the first timing location may be avoided, thereby avoiding waste of unnecessary resources. Correspondingly, k1=2, and k2=4. The embodiment is also applicable to the uplink HARQ timing.

### Embodiment 10

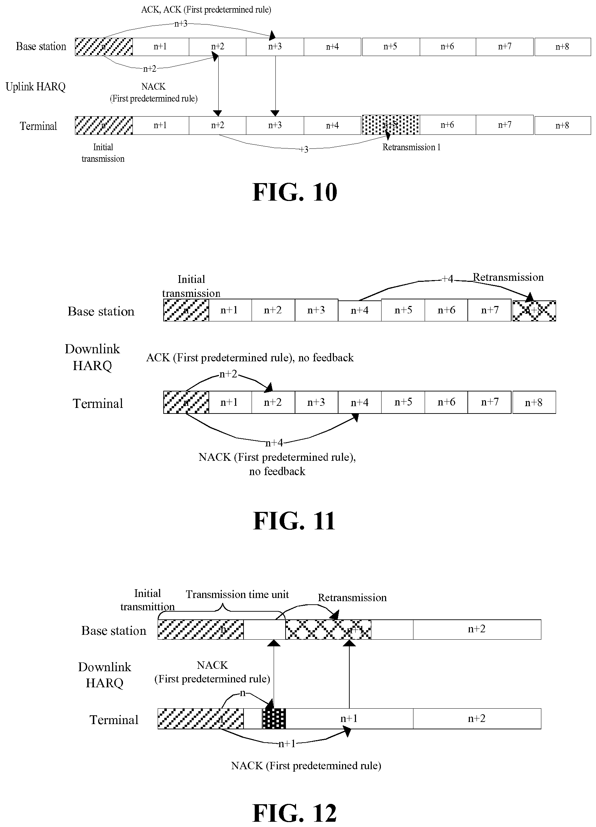

FIG. 10 is a schematic diagram illustrating a case where uplink HARQ is transmitted in two timing locations (i.e., HARQ timing locations) and the first location (i.e., the first HARQ timing location) is quickly determined to be an NACK and the second location is determined to be an ACK. In FIG. 10, the terminal transmits initial transmission data on the transmission time unit n. The initial transmission data includes 2 data blocks. The base station receives the data on corresponding transmission time units and simultaneously decides the received data according to different predefined rules. In FIG. 10, the base station finds that one data block is received wrongly according to the quick determination and decides that two data blocks are received correctly according to the actual demodulation. Correspondingly, the base station binds feedback on the transmission time unit n+2. That is, the 1-bit NACK is fed back on the transmission time unit n+2, and 2-bit ACKs are fed back on the two data blocks on the transmission time unit n+4. When receiving the NACK feedback on the transmission time unit n+2, the terminal will prepare the transmission of the retransmission data. Even when the terminal receives the 2-bit ACK feedback at the TTI n+4, the terminal will not cancel the transmission of the retransmission data. That is, the terminal still transmits the retransmission data on the transmission time unit n+5. The embodiment describes a case where processing capability of the terminal is insufficient, that is, the case where the n+3 feedback has not been completed on the transmission time unit n+5. The embodiment is also applicable to the downlink HARQ timing.

### Embodiment 11

FIG. 11 is a schematic diagram of a case where downlink HARQ is transmitted in two timing locations (i.e., HARQ timing locations) and the first location (i.e., the first HARQ timing location) is quickly determined to be an ACK and the second location is determined to be an NACK. In FIG. 11, the base station transmits initial transmission data on the transmission time unit n. The initial transmission data includes one data block. The terminal receives the data on a corresponding transmission time unit and determines the received data according to different predefined rules. The terminal follows the following transmission rules. If the data is determined to be received correctly, no feedback is made on the transmission time unit n+2; and if the data is determined to be received wrongly, the NACK is fed back. If the data is determined to be received wrongly, no feedback is made on the transmission time unit n+4; and if the data is determined to be received correctly, the ACK is fed back. In FIG. 11, the terminal determines according to the quick determination that the data is received correctly, but determines according to the determination on actual demodulated data that the data is received wrongly. Correspondingly, the terminal makes no feedback on both the transmission time unit n+2 and the transmission time unit n+4. In this situation, the base station will prepare the transmission of the retransmission data on a transmission time unit after the transmission time unit n+4. In FIG. 11, the data is retransmitted on the transmission time unit n+8. Correspondingly, k1=2, k2=4 and m2=4. Through the method in the embodiment, in the scenario described above, the data may still be retransmitted even when the base station fails to detect any feedback, thereby reducing the overhead without ambiguity. The embodiment is also applicable to the uplink HARQ timing.

### Embodiment 12

FIG. 12 is a schematic diagram illustrating a case where downlink HARQ is transmitted in two timing locations (i.e., HARQ timing locations) and the first location (i.e., the first HARQ timing location) is self-contained feedback. In FIG. 12, the base station transmits initial transmission data on the transmission time unit n. The transmitted data only occupies the first half of the transmission time unit. The terminal receives the data on the corresponding transmission time unit and determines the received data according to different determination rules. In FIG. 12, results obtained by the terminal according to a first level determination rule and a second level determination rule are NACKs. The terminal feeds back the NACK on the transmission time unit n and on the transmission time unit n+1. Correspondingly, after receiving the NACK feedback on the transmission time unit n, the base station schedules retransmission on the transmission time unit n+1, and the base station does not trigger the retransmission after receiving the NACK feedback on the transmission time unit n+1. Through the method of the embodiment, the self-contained feedback may be more easily implemented, thereby reducing the retransmission delay. Correspondingly, k1=0, k2=1 and m1=1. The embodiment is also applicable to the uplink HARQ timing.

### Embodiment 13

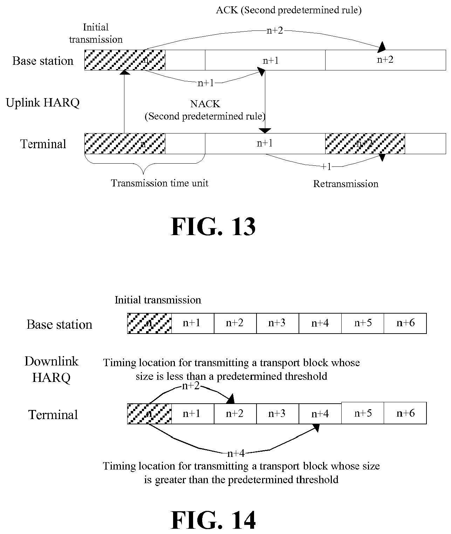

FIG. 13 is a schematic diagram illustrating a case where uplink HARQ is transmitted in two timing locations and a transmission unit contains both uplink and downlink. In FIG. 13, the terminal transmits initial transmission data on the transmission time unit n. The transmitted data only occupies the first half of the transmission time unit. The base station receives the data on the corresponding transmission time unit and determines the received data according to different determination rules. In FIG. 13, results obtained by the terminal according to a first level determination rule and a second level determination rule are NACKs. The terminal feeds back the NACK respectively on the transmission time unit n and on the transmission time unit n+1. In FIG. 13, the base station feeds back the NACK on the transmission time unit n+1, and feeds back the ACK on the transmission time unit n+2. Correspondingly, after receiving the NACK feedback on the transmission time unit n+1, the terminal schedules retransmission on the transmission time unit n+2, and the terminal does not cancel the retransmission after receiving the ACK feedback on the transmission time unit n+2. Correspondingly, k1=1, k2=2 and m1=1. Furthermore, if the ACK is determined in the first timing location, no feedback is made in the first timing location; and if the ACK is also determined in the second timing location, the ACK is fed back in the first timing location. If the ACK is determined in the first timing location and no feedback is made in the first timing location, and if the ACK is determined in the second timing location and no feedback is made in the second timing location, the base station cannot distinguish a case where the absence of feedback is caused by the mistaken demodulation of a UL scheduling bit from a case where the absence of feedback is caused by correct demodulation on the data using the first and second level determination rules, thereby possibly leading to data packet loss. The embodiment is also applicable to the uplink HARQ timing.

### Embodiment 14

FIG. 14 is a schematic diagram illustrating a case where downlink HARQ transmits feedback in one of two defined timing locations. In FIG. 14, the base station transmits initial transmission data on the transmission time unit n. The initial transmission data includes one data block. In FIG. 14, when the size of the transmitted data block is less than a predetermined threshold (for example, less than a half of a maximum value of a data block in the existing LTE protocol), or when the UE processing capability is strong, the terminal may quickly decode the data and determines whether the data is received correctly. The terminal feeds back the ACK/NACK on the transmission time unit n+2. If the data is decoded correctly, the ACK is fed back; otherwise, the NACK is fed back. If the size of the transmitted data block is greater than a predetermined threshold, or if the UE processing capability is weak, it is impossible for the terminal to quickly decode the data and determine whether the data is received correctly. The terminal feeds back the ACK/NACK on the transmission time unit n+4. If the data is decoded correctly, the ACK is fed back; otherwise, the NACK is fed back. The embodiment is also applicable to the uplink HARQ timing.

### Embodiment 15

The embodiment of the present invention further provides a storage medium. Optionally, in the embodiment, the storage medium may be configured to store program codes for executing the steps described below.

A first device receives, on a transmission time unit n, data transmitted by a second device, where the transmission time unit is a time unit for transmitting information. The first device selects a transmission time unit location for transmitting HARQ information according to a predefined HARQ timing set, where the predefined HARQ timing set includes N HARQ timing locations, and N is a positive integer greater than or equal to 2. The first device transmits the HARQ information for the data in the selected transmission time unit location.

The embodiment of the present invention further provides a storage medium. Optionally, in the embodiment, the storage medium may be configured to store program codes for executing the steps described below. The second device transmits data transmitted to the first device on the transmission time unit n, where the transmission time unit is a time unit for transmitting information. The second device selects the transmission time unit location for receiving HARQ information according to the predefined HARQ timing set, where the predefined HARQ timing set includes N HARQ timing locations, and N is a positive integer greater than or equal to 2. The second device receives the HARQ information of the data in the selected transmission time unit location.

Optionally, in the embodiment, the storage medium described above may include, but is not limited to, a USB flash drive, a read-only memory (ROM), a random access memory (RAM), a mobile hard disk, a magnetic disk, an optical disk or another medium capable of storing the program codes.

Optionally, for specific examples in the embodiment, reference may be made to the examples described in the above-mentioned embodiments and optional implementation modes, and repetition will not be made herein.

Apparently, it should be understood by those skilled in the art that each of the above-mentioned modules or steps of the present invention may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatuses, so that the modules or steps may be stored in a storage device and executable by the computing apparatuses. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only preferred embodiments of the present invention and are not intended to limit the present invention, and for those skilled in the art, the present invention may have various modifications and variations. Any modifications, equivalent substitutions, improvements and the like made within the scope of the appended claims fall within the scope of the present invention.

### INDUSTRIAL APPLICABILITY

Through the technical solution provided in embodiments of the present invention, the feedback timing of hybrid automatic repeat request (HARQ) is redefined. That is, the HARQ timing location is used as a timing transmission location of the HARQ. In such a way, the rapid feedback of the NACK may be implemented, and categorical timing of the ACK and the NACK may be implemented, thereby reducing the retransmission delay. Therefore, the problem in the existing art where the NACK cannot be fed back faster than the ACK may be solved.

## Claims

1. A method for transmitting hybrid automatic repeat request, HARQ, information, comprising:
receiving (S 102), by a first device, data on a transmission time unit n of the first device;
selecting (S104), by the first device, a transmission time unit location for transmitting HARQ feedback according to a predefined HARQ timing set, wherein the predefined HARQ timing set comprises a number N of HARQ timing locations, and N is a positive integer greater than or equal to 2; and
transmitting (S106), by the first device, the HARQ feedback for the data in the selected transmission time unit location,
wherein when N=2, the predefined HARQ timing set is {n+k1, n+k2}, wherein a first HARQ timing location is a transmission time unit n+k1, a second HARQ timing location is a transmission time unit n+k2, k1 is an integer greater than or equal to 0, k2 is a positive integer, and k1 is less than k2;
wherein the first device, on the transmission time unit n+k1 and the transmission time unit n+k2, transmits the HARQ feedback for the data received on the transmission time unit n.

2. The method according to claim 1, wherein
when the data comprises one data block, or when the data comprises two or more data blocks and the first device uses data block binding feedback, the first device transmits 1-bit feedback for the data on the transmission time unit n+k1, and transmits 1-bit feedback for the data on the transmission time unit n+k2;
wherein the data block binding feedback refers to that in response to determining that all data blocks of the data are received correctly, an acknowledgement, ACK, is fed back; otherwise, a negative acknowledgement, NACK, is fed back.

3. The method according to claim 1, wherein
when the data comprises two or more data blocks, the first device transmits P-bit feedback for the data on the transmission time unit n+k1, and transmits Q-bit feedback for the data on the transmission time unit n+k2, wherein P and Q are positive integers and less than or equal to a number of data blocks in the data.

4. The method according to claim 2, wherein in response to determining that the data received by the first device on the transmission time unit n is determined to be received correctly, no feedback is made on the transmission time unit n+k1 corresponding to the first HARQ timing location; otherwise, the NACK is fed back on the transmission time unit n+k1 corresponding to a first HARQ timing location.

5. The method according to claim 4, wherein
in response to determining that the data received by the first device on the transmission time unit n is determined to be received correctly, the ACK is fed back on the transmission time unit n+k2 corresponding to the second HARQ timing location; otherwise, the NACK is fed back on the transmission time unit n+k2 corresponding to the second HARQ timing location; or
in response to determining that the data received by the first device on the transmission time unit n is determined to be received correctly, the ACK is fed back on the transmission time unit n+k2 corresponding to the second HARQ timing location; otherwise, no feedback is made on the transmission time unit n+k2 corresponding to the second HARQ timing location.

6. The method according to claim 2, wherein in response to determining that the data received by the first device on the transmission time unit n is determined to be received correctly, the ACK is fed back on the transmission time unit n+k1 corresponding to the first HARQ timing location; otherwise, no feedback is made on the transmission time unit n+k1 corresponding to the first HARQ timing location.

7. The method according to claim 6, wherein in response to determining that the data received by the first device on the transmission time unit n is determined to be received correctly, the ACK is fed back on the transmission time unit n+k2 corresponding to the second HARQ timing location; otherwise, the NACK is fed back on the transmission time unit n+k2 corresponding to the second HARQ timing location.

8. The method according to claim 3, wherein on the transmission time unit n+k1 corresponding to the first HARQ timing location, the first device feeds back the NACK for each data block received wrongly in the data received on the transmission time unit n, and makes no feedback for each data block received correctly.

9. The method according to claim 8, wherein on the transmission time unit n+k2 corresponding to the second HARQ timing location, the first device feeds back the NACK for each data block received wrongly in the data received on the transmission time unit n, and feeds back the ACK for each data block received correctly; or
on the transmission time unit n, the first device feeds back the ACK for each data block received correctly, and makes no feedback for each data block received wrongly.

10. The method according to claim 1, wherein a transmission mode used for feedback on the transmission time unit n+k1 corresponding to the first HARQ timing location is different from a transmission mode used for feedback on the transmission time unit n+k2 corresponding to the second HARQ timing location,
wherein the transmission mode is an uplink physical control channel format.

11. The method according to claim 1, wherein
determination on received data on a transmission time unit n+k1 corresponding to a first HARQ timing location is performed according to a first predetermined rule; and
determination on received data on a transmission time unit n+k2 corresponding to a second HARQ timing location is performed according to a second predetermined rule.

12. A method for receiving hybrid automatic repeat request, HARQ, information, comprising:
transmitting (S302), by a second device, data on a transmission time unit n;
selecting (S304), by the second device, a transmission time unit location for receiving an HARQ according to a predefined HARQ timing set, wherein the predefined HARQ timing set comprises a number N of HARQ timing locations, and N is a positive integer greater than or equal to 2; and
receiving (S306), by the second device, the HARQ feedback for the data in the selected transmission time unit location,
wherein when N=2, the predefined HARQ timing set is {n+k1, n+k2}, wherein a first HARQ timing location is a transmission time unit n+k1, a second HARQ timing location is a transmission time unit n+k2, k1 is an integer greater than or equal to 0, k2 is a positive integer, and k1 is less than k2;
wherein the second device, on the transmission time unit n+k1 and the transmission time unit n+k2, receives the HARQ feedback for the data transmitted on the transmission time unit n.

13. A device for transmitting hybrid automatic repeat request, HARQ, information, applied to a first device and comprising:
a reception module (20), which is configured to receive, on a transmission time unit n, data transmitted by a second device;
a selection module (22), which is configured to select a transmission time unit location for transmitting HARQ feedback according to a predefined HARQ timing set, wherein the predefined HARQ timing set comprises a number N of HARQ timing locations, and N is a positive integer greater than or equal to 2; and
a transmission module (24), which is configured to transmit the HARQ feedback for the data in the selected transmission time unit location,
wherein when N=2, the predefined HARQ timing set is {n+k1, n+k2}, wherein a first HARQ timing location is a transmission time unit n+k1, a second HARQ timing location is a transmission time unit n+k2, k1 is an integer greater than or equal to 0, k2 is a positive integer, and k1 is less than k2;
wherein the transmission module is configured to transmit, on the transmission time unit n+k1 and the transmission time unit n+k2, the HARQ feedback for the data received on the transmission time unit n.

14. A device for receiving hybrid automatic repeat request, HARQ, information, applied to a second device and comprising:
a transmission module (40), which is configured to transmit data to a first device on a transmission time unit n, wherein the transmission time unit is a time unit for transmitting information;
a selection module (42), which is configured to select a transmission time unit location for receiving an HARQ according to a predefined HARQ timing set, wherein the predefined HARQ timing set comprises a number N of HARQ timing locations, and N is a positive integer greater than or equal to 2; and
a reception module (44), which is configured to receive the HARQ feedback for the data in the selected transmission time unit location,
wherein when N=2, the predefined HARQ timing set is {n+k1, n+k2}, wherein a first HARQ timing location is a transmission time unit n+k1, a second HARQ timing location is a transmission time unit n+k2, k1 is an integer greater than or equal to 0, k2 is a positive integer, and k1 is less than k2;
wherein the reception module is configured to receive, on the transmission time unit n+k1 and the transmission time unit n+k2, the HARQ feedback for the data transmitted on the transmission time unit n.

## Patentansprüche

1. Verfahren zum Übertragen von Informationen zu einer hybriden automatischen Wiederholungsanforderung, HARQ, das Folgendes umfasst:
Empfangen (S102) von Daten in einer Übertragungszeiteinheit n einer ersten Vorrichtung durch die erste Vorrichtung;
Auswählen (S104) eines Übertragungszeiteinheitsortes zum Übertragen einer HARQ-Rückmeldung gemäß einem vordefinierten HARQ-Timingsatz durch die erste Vorrichtung, wobei der vordefinierte HARQ-Timingsatz eine Anzahl N von HARQ-Timingorten umfasst und N eine positive Ganzzahl größer als oder gleich 2 ist; und
Übertragen (S106) der HARQ-Rückmeldung für die Daten im ausgewählten Übertragungszeiteinheitsort durch die erste Vorrichtung,
wobei, wenn N=2, der vordefinierte HARQ-Timingsatz {n+k1, n+k2} ist, wobei ein erster HARQ-Timingort eine Übertragungszeiteinheit n+k1 ist, ein zweiter HARQ-Timingort eine Übertragungszeiteinheit n+k2 ist, k1 eine Ganzzahl größer als oder gleich 0 ist, k2 eine positive Ganzzahl ist und k1 kleiner als k2 ist;
wobei die erste Vorrichtung die HARQ-Rückmeldung für die in der Übertragungszeiteinheit n empfangenen Daten in der Übertragungszeiteinheit n+k1 und der Übertragungszeiteinheit n+k2 überträgt.

2. Verfahren nach Anspruch 1, wobei
wenn die Daten einen Datenblock umfassen oder wenn die Daten zwei oder mehr Datenblöcke umfassen und die erste Vorrichtung eine Datenblockbindungsrückmeldung verwendet, die erste Vorrichtung eine 1-Bit-Rückmeldung für die Daten in der Übertragungszeiteinheit n+k1 überträgt und eine 1-Bit-Rückmeldung für die Daten in der Übertragungszeiteinheit n+k2 überträgt;
wobei sich die Datenblockbindungsrückmeldung darauf bezieht, dass in Reaktion auf das Bestimmen, dass alle Datenblöcke der Daten korrekt empfangen wurden, eine Bestätigung, ACK, rückgemeldet wird; andernfalls eine Negativbestätigung, NACK, rückgemeldet wird.

3. Verfahren nach Anspruch 1, wobei
wenn die Daten zwei oder mehr Datenblöcke umfassen, die erste Vorrichtung eine P-Bit-Rückmeldung für die Daten in der Übertragungszeiteinheit n+k1 überträgt und eine Q-Bit-Rückmeldung für die Daten in der Übertragungszeiteinheit n+k2 überträgt, wobei P und Q positive Ganzzahlen und kleiner als oder gleich einer Anzahl von Datenblöcken in den Daten sind.

4. Verfahren nach Anspruch 2, wobei in Reaktion auf das Bestimmen, dass bestimmt wird, dass die von der ersten Vorrichtung in der Übertragungszeiteinheit n empfangenen Daten korrekt empfangen wurden, in der Übertragungszeiteinheit n+k1, die dem ersten HARQ-Timingort entspricht, keine Rückmeldung erfolgt; andernfalls in der Übertragungszeiteinheit n+k1, die einem ersten HARQ-Timingort entspricht, das NACK rückgemeldet wird.

5. Verfahren nach Anspruch 4, wobei
in Reaktion auf das Bestimmen, dass bestimmt wird, dass die von der ersten Vorrichtung in der Übertragungszeiteinheit n empfangenen Daten korrekt empfangen wurden, in der Übertragungszeiteinheit n+k2, die dem zweiten HARQ-Timingort entspricht, das ACK rückgemeldet wird; andernfalls in der Übertragungszeiteinheit n+k2, die dem zweiten HARQ-Timingort entspricht, das NACK rückgemeldet wird; oder
in Reaktion auf das Bestimmen, dass bestimmt wird, dass die von der ersten Vorrichtung in der Übertragungszeiteinheit n empfangenen Daten korrekt empfangen wurden, in der Übertragungszeiteinheit n+k2, die dem zweiten HARQ-Timingort entspricht, das ACK rückgemeldet wird; andernfalls in der Übertragungszeiteinheit n+k2, die dem zweiten HARQ-Timingort entspricht, keine Rückmeldung erfolgt.

6. Verfahren nach Anspruch 2, wobei in Reaktion auf das Bestimmen, dass bestimmt wird, dass die von der ersten Vorrichtung in der Übertragungszeiteinheit n empfangenen Daten korrekt empfangen wurden, in der Übertragungszeiteinheit n+k1, die dem ersten HARQ-Timingort entspricht, das ACK rückgemeldet wird; andernfalls in der Übertragungszeiteinheit n+k1, die dem ersten HARQ-Timingort entspricht, keine Rückmeldung erfolgt.

7. Verfahren nach Anspruch 6, wobei in Reaktion auf das Bestimmen, dass bestimmt wird, dass die von der ersten Vorrichtung in der Übertragungszeiteinheit n empfangenen Daten korrekt empfangen wurden, in der Übertragungszeiteinheit n+k2, die dem zweiten HARQ-Timingort entspricht, das ACK rückgemeldet wird; andernfalls in der Übertragungszeiteinheit n+k2, die dem zweiten HARQ-Timingort entspricht, das NACK rückgemeldet wird.

8. Verfahren nach Anspruch 3, wobei in der Übertragungszeiteinheit n+k1, die dem ersten HARQ-Timingort entspricht, die Vorrichtung für jeden Datenblock, der in den in der Übertragungszeiteinheit n empfangenen Daten falsch empfangen wird, das NACK rückmeldet und für jeden korrekt empfangenen Datenblock keine Rückmeldung vornimmt.

9. Verfahren nach Anspruch 8, wobei in der Übertragungszeiteinheit n+k2, die dem zweiten HARQ-Timingort entspricht, die Vorrichtung für jeden Datenblock, der in den in der Übertragungszeiteinheit n empfangenen Daten falsch empfangen wird, das NACK rückmeldet und für jeden korrekt empfangenen Datenblock das ACK rückmeldet; oder
die erste Vorrichtung in der Übertragungszeiteinheit n für jeden korrekt empfangenen Datenblock das ACK rückmeldet und für jeden falsch empfangenen Datenblock keine Rückmeldung vornimmt.

10. Verfahren nach Anspruch 1, wobei sich ein Übertragungsmodus, der für die Rückmeldung in der Übertragungszeiteinheit n+k1, die dem ersten HARQ-Timingort entspricht, verwendet wird, von einem Übertragungsmodus unterscheidet, der für die Rückmeldung in der Übertragungszeiteinheit n+k2, die dem zweiten HARQ-Timingort entspricht, verwendet wird,
wobei der Übertragungsmodus ein physisches Uplinksteuerkanalformat ist.

11. Verfahren nach Anspruch 1, wobei
eine Bestimmung zu empfangenen Daten in einer Übertragungszeiteinheit n+k1, die einem ersten HARQ-Timingort entspricht, gemäß einer ersten vorbestimmten Regel durchgeführt wird und
eine Bestimmung zu empfangenen Daten in einer Übertragungszeiteinheit n+k2, die einem zweiten HARQ-Timingort entspricht, gemäß einer zweiten vorbestimmten Regel durchgeführt wird.

12. Verfahren zum Empfangen von Informationen zu einer hybriden automatischen Wiederholungsanforderung, HARQ, das Folgendes umfasst:
Übertragen (S302) von Daten in einer Übertragungszeiteinheit n durch eine zweite Vorrichtung;
Auswählen (S304) eines Übertragungszeiteinheitsortes zum Empfangen einer HARQ gemäß einem vordefinierten HARQ-Timingsatz durch die zweite Vorrichtung, wobei der vordefinierte HARQ-Timingsatz eine Anzahl N von HARQ-Timingorten umfasst und N eine positive Ganzzahl größer als oder gleich 2 ist; und
Empfangen (S306) der HARQ-Rückmeldung für die Daten im ausgewählten Übertragungszeiteinheitsort durch die zweite Vorrichtung,
wobei, wenn N=2, der vordefinierte HARQ-Timingsatz {n+k1, n+k2} ist, wobei ein erster HARQ-Timingort eine Übertragungszeiteinheit n+k1 ist, ein zweiter HARQ-Timingort eine Übertragungszeiteinheit n+k2 ist, k1 eine Ganzzahl größer als oder gleich 0 ist, k2 eine positive Ganzzahl ist und k1 kleiner als k2 ist;
wobei die zweite Vorrichtung die HARQ-Rückmeldung für die in der Übertragungszeiteinheit n übertragenen Daten in der Übertragungszeiteinheit n+k1 und der Übertragungszeiteinheit n+k2 empfängt.

13. Vorrichtung zum Übertragen von Informationen zu einer hybriden automatischen Wiederholungsanforderung, HARQ, die auf eine erste Vorrichtung angewendet werden, das Folgendes umfasst:
ein Empfangsmodul (20), das dazu ausgelegt ist, von einer zweiten Vorrichtung übertragene Daten in einer Übertragungszeiteinheit n zu empfangen;
ein Auswahlmodul (22), das dazu ausgelegt ist, einen Übertragungszeiteinheitsort zum Übertragen einer HARQ-Rückmeldung gemäß einem vordefinierten HARQ-Timingsatz auszuwählen, wobei der vordefinierte HARQ-Timingsatz eine Anzahl N von HARQ-Timingorten umfasst und N eine positive Ganzzahl größer als oder gleich 2 ist; und
ein Übertragungsmodul (24), das dazu ausgelegt ist, die HARQ-Rückmeldung für die Daten im ausgewählten Übertragungszeiteinheitsort zu übertragen,
wobei, wenn N=2, der vordefinierte HARQ-Timingsatz {n+k1, n+k2} ist, wobei ein erster HARQ-Timingort eine Übertragungszeiteinheit n+k1 ist, ein zweiter HARQ-Timingort eine Übertragungszeiteinheit n+k2 ist, k1 eine Ganzzahl größer als oder gleich 0 ist, k2 eine positive Ganzzahl ist und k1 kleiner als k2 ist;
wobei das Übertragungsmodul dazu ausgelegt ist, die HARQ-Rückmeldung für die in der Übertragungszeiteinheit n empfangenen Daten in der Übertragungszeiteinheit n+k1 und der Übertragungszeiteinheit n+k2 zu übertragen.

14. Vorrichtung zum Empfangen von Informationen zu einer hybriden automatischen Wiederholungsanforderung, HARQ, die auf eine zweite Vorrichtung angewendet werden, das Folgendes umfasst:
ein Übertragungsmodul (40), das dazu ausgelegt ist, in einer Übertragungszeiteinheit n Daten zu einer ersten Vorrichtung zu übertragen, wobei die Übertragungszeiteinheit eine Zeiteinheit zum Übertragen von Informationen ist;
ein Auswahlmodul (42), das dazu ausgelegt ist, einen Übertragungszeiteinheitsort zum Empfangen einer HARQ gemäß einem vordefinierten HARQ-Timingsatz auszuwählen, wobei der vordefinierte HARQ-Timingsatz eine Anzahl N von HARQ-Timingorten umfasst und N eine positive Ganzzahl größer als oder gleich 2 ist; und
ein Empfangsmodul (44), das dazu ausgelegt ist, die HARQ-Rückmeldung für die Daten im ausgewählten Übertragungszeiteinheitsort zu empfangen,
wobei, wenn N=2, der vordefinierte HARQ-Timingsatz {n+k1, n+k2} ist, wobei ein erster HARQ-Timingort eine Übertragungszeiteinheit n+k1 ist, ein zweiter HARQ-Timingort eine Übertragungszeiteinheit n+k2 ist, k1 eine Ganzzahl größer als oder gleich 0 ist, k2 eine positive Ganzzahl ist und k1 kleiner als k2 ist;
wobei das Empfangsmodul dazu ausgelegt ist, die HARQ-Rückmeldung für die in der Übertragungszeiteinheit n übertragenen Daten in der Übertragungszeiteinheit n+k1 und der Übertragungszeiteinheit n+k2 zu empfangen.

## Revendications

1. Procédé pour transmettre des informations de demande de répétition automatique hybride, HARQ, comprenant :
de recevoir (S102), par un premier dispositif, des données sur une unité de temps de transmission n du premier dispositif ;
de sélectionner (S104), par le premier dispositif, un emplacement d'unité de temps de transmission pour transmettre un retour HARQ selon un ensemble de temporisation HARQ prédéfini, dans lequel l'ensemble de temporisation HARQ prédéfini comprend un nombre N d'emplacements de temporisation HARQ, et N est un entier positif supérieur ou égal à 2 ; et
de transmettre (S106), par le premier dispositif, le retour HARQ pour les données dans l'emplacement d'unité de temps de transmission sélectionné,
dans lequel lorsque N = 2, l'ensemble de temporisation HARQ prédéfini est {n+k1, n+k2}, dans lequel un premier emplacement de temporisation HARQ est une unité de temps de transmission n+k1, un deuxième emplacement de temporisation HARQ est une unité de temps de transmission n+k2, k1 est un entier supérieur ou égal à 0, k2 est un entier positif, et k1 est inférieur à k2 ;
dans lequel le premier dispositif transmet, sur l'unité de temps de transmission n+k1 et l'unité de temps de transmission n+k2, le retour HARQ pour les données reçues sur l'unité de temps de transmission n.

2. Procédé selon la revendication 1, dans lequel
lorsque les données comprennent un bloc de données, ou lorsque les données comprennent deux blocs de données ou plus et que le premier dispositif utilise un retour de liaison de bloc de données, le premier dispositif transmet un retour de 1 bit pour les données sur l'unité de temps de transmission n+k1, et transmet un retour de 1 bit pour les données sur l'unité de temps de transmission n+k2 ;
dans lequel le retour de liaison de bloc de données fait référence au fait qu'en réponse à la détermination d'une réception correcte de tous les blocs de données des données, un accusé de réception, ACK, est renvoyé ; sinon, un accusé de réception négatif, NACK, est renvoyé.

3. Procédé selon la revendication 1, dans lequel
lorsque les données comprennent deux blocs de données ou plus, le premier dispositif transmet un retour de P bits pour les données sur l'unité de temps de transmission n+k1, et transmet un retour de Q bits pour les données sur l'unité de temps de transmission n+k2, dans lequel P et Q sont des entiers positifs inférieurs ou égaux à un nombre de blocs de données dans les données.

4. Procédé selon la revendication 2, dans lequel, en réponse à la détermination d'une réception correcte des données reçues par le premier dispositif sur l'unité de temps de transmission n, aucun retour n'est effectué sur l'unité de temps de transmission n+k1 correspondant au premier emplacement de temporisation HARQ ; sinon, le NACK est renvoyé sur l'unité de temps de transmission n+k1 correspondant à un premier emplacement de temporisation HARQ.

5. Procédé selon la revendication 4, dans lequel
en réponse à la détermination d'une réception correcte des données reçues par le premier dispositif sur l'unité de temps de transmission n, l'ACK est renvoyé sur l'unité de temps de transmission n+k2 correspondant au deuxième emplacement de temporisation HARQ ; sinon, le NACK est renvoyé sur l'unité de temps de transmission n+k2 correspondant au deuxième emplacement de temporisation HARQ ; ou
en réponse à la détermination d'une réception correcte des données reçues par le premier dispositif sur l'unité de temps de transmission n, l'ACK est renvoyé sur l'unité de temps de transmission n+k2 correspondant au deuxième emplacement de temporisation HARQ ; sinon, aucun retour n'est effectué sur l'unité de temps de transmission n+k2 correspondant au deuxième emplacement de temporisation HARQ.

6. Procédé selon la revendication 2, dans lequel, en réponse à la détermination d'une réception correcte des données reçues par le premier dispositif sur l'unité de temps de transmission n, l'ACK est renvoyé sur l'unité de temps de transmission n+k1 correspondant au premier emplacement de temporisation HARQ ; sinon, aucun retour n'est effectué sur l'unité de temps de transmission n+k1 correspondant au premier emplacement de temporisation HARQ.

7. Procédé selon la revendication 6, dans lequel, en réponse à la détermination d'une réception correcte des données reçues par le premier dispositif sur l'unité de temps de transmission n, l'ACK est renvoyé sur l'unité de temps de transmission n+k2 correspondant au deuxième emplacement de temporisation HARQ ; sinon, le NACK est renvoyé sur l'unité de temps de transmission n+k2 correspondant au deuxième emplacement de temporisation HARQ.

8. Procédé selon la revendication 3, dans lequel, sur l'unité de temps de transmission n+k1 correspondant au premier emplacement de temporisation HARQ, le premier dispositif renvoie le NACK pour chaque bloc de données reçu de manière erronée dans les données reçues sur l'unité de temps de transmission n, et ne fait aucun retour pour chaque bloc de données reçu correctement.

9. Procédé selon la revendication 8, dans lequel, sur l'unité de temps de transmission n+k2 correspondant au deuxième emplacement de temporisation HARQ, le premier dispositif renvoie le NACK pour chaque bloc de données reçu de manière erronée dans les données reçues sur l'unité de temps de transmission n, et renvoie l'ACK pour chaque bloc de données reçu correctement ; ou
sur l'unité de temps de transmission n, le premier dispositif renvoie l'ACK pour chaque bloc de données reçu correctement, et ne fait aucun retour pour chaque bloc de données reçu de manière erronée.

10. Procédé selon la revendication 1, dans lequel un mode de transmission utilisé pour le retour sur l'unité de temps de transmission n+k1 correspondant au premier emplacement de temporisation HARQ est différent d'un mode de transmission utilisé pour le retour sur l'unité de temps de transmission n+k2 correspondant au deuxième emplacement de temporisation HARQ,
dans lequel le mode de transmission est un format de canal physique de contrôle de liaison montante.

11. Procédé selon la revendication 1, dans lequel
la détermination, sur des données reçues sur une unité de temps de transmission n+k1 correspondant à un premier emplacement de temporisation HARQ, est réalisée selon une première règle prédéterminée ; et
la détermination, sur des données reçues sur une unité de temps de transmission n+k2 correspondant à un deuxième emplacement de temporisation HARQ, est réalisée selon une deuxième règle prédéterminée.

12. Procédé pour recevoir des informations de demande de répétition automatique hybride, HARQ, comprenant :
de transmettre (S302), par un deuxième dispositif, des données sur une unité de temps de transmission n ;
de sélectionner (S304), par le deuxième dispositif, un emplacement d'unité de temps de transmission pour recevoir un HARQ selon un ensemble de temporisation HARQ prédéfini, dans lequel l'ensemble de temporisation HARQ prédéfini comprend un nombre N d'emplacements de temporisation HARQ, et N est un entier positif supérieur ou égal à 2 ; et
de recevoir (S306), par le deuxième dispositif, le retour HARQ pour les données dans l'emplacement d'unité de temps de transmission sélectionné,
dans lequel lorsque N = 2, l'ensemble de temporisation HARQ prédéfini est {n+k1, n+k2}, dans lequel un premier emplacement de temporisation HARQ est une unité de temps de transmission n+k1, un deuxième emplacement de temporisation HARQ est une unité de temps de transmission n+k2, k1 est un entier supérieur ou égal à 0, k2 est un entier positif, et k1 est inférieur à k2 ;
dans lequel le deuxième dispositif reçoit, sur l'unité de temps de transmission n+k1 et l'unité de temps de transmission n+k2, le retour HARQ pour les données transmises sur l'unité de temps de transmission n.

13. Dispositif pour transmettre des informations de demande de répétition automatique hybride, HARQ, appliquées à un premier dispositif et comprenant :
un module de réception (20), qui est configuré pour recevoir, sur une unité de temps de transmission n, des données transmises par un deuxième dispositif ;
un module de sélection (22), qui est configuré pour sélectionner un emplacement d'unité de temps de transmission pour transmettre un retour HARQ selon un ensemble de temporisation HARQ prédéfini, dans lequel l'ensemble de temporisation HARQ prédéfini comprend un nombre N d'emplacements de temporisation HARQ, et N est un entier positif supérieur ou égal à 2 ; et
un module de transmission (24), qui est configuré pour transmettre le retour HARQ pour les données dans l'emplacement d'unité de temps de transmission sélectionné,
dans lequel lorsque N = 2, l'ensemble de temporisation HARQ prédéfini est {n+k1, n+k2}, dans lequel un premier emplacement de temporisation HARQ est une unité de temps de transmission n+k1, un deuxième emplacement de temporisation HARQ est une unité de temps de transmission n+k2, k1 est un entier supérieur ou égal à 0, k2 est un entier positif, et k1 est inférieur à k2 ;
dans lequel le module de transmission est configuré pour transmettre, sur l'unité de temps de transmission n+k1 et l'unité de temps de transmission n+k2, le retour HARQ pour les données reçues sur l'unité de temps de transmission n.

14. Dispositif pour recevoir des informations de demande de répétition automatique hybride, HARQ, appliquées à un deuxième dispositif et comprenant :
un module de transmission (40), qui est configuré pour transmettre des données à un premier dispositif sur une unité de temps de transmission n, dans lequel l'unité de temps de transmission est une unité de temps pour transmettre des informations ;
un module de sélection (42), qui est configuré pour sélectionner un emplacement d'unité de temps de transmission pour recevoir un HARQ selon un ensemble de temporisation HARQ prédéfini, dans lequel l'ensemble de temporisation HARQ prédéfini comprend un nombre N d'emplacements de temporisation HARQ, et N est un entier positif supérieur ou égal à 2 ; et
un module de réception (44), qui est configuré pour recevoir le retour HARQ pour les données dans l'emplacement d'unité de temps de transmission sélectionné,
dans lequel lorsque N = 2, l'ensemble de temporisation HARQ prédéfini est {n+k1, n+k2}, dans lequel un premier emplacement de temporisation HARQ est une unité de temps de transmission n+k1, un deuxième emplacement de temporisation HARQ est une unité de temps de transmission n+k2, k1 est un entier supérieur ou égal à 0, k2 est un entier positif, et k1 est inférieur à k2 ;
dans lequel le module de réception est configuré pour recevoir, sur l'unité de temps de transmission n+k1 et l'unité de temps de transmission n+k2, le retour HARQ pour les données transmises sur l'unité de temps de transmission n.
